# EUROPÄISCHE PATENTANMELDUNG

(11) **EP 2 546 570 A2**
(43) Veröffentlichungstag der Anmeldung: **16.01.2013**
(21) Anmeldenummer: 12167234.9
(22) Anmeldetag: 09.05.2012
(51) Int. Cl.: F21S 9/03, F21S 4/00, F21Y 101/02

(54) **Solarleuchte**

(30) Priorität: 12.07.2011 DE 202011103050 U
(71) Anmelder: Gaumann, Jörn, 44267 Dortmund (DE)
(72) Erfinder: Gaumann, Jörn, 44267 Dortmund (DE)
(74) Vertreter: Meinke, Jochen

(57) **Zusammenfassung**

Die Erfindung betrifft eine Solarleuchte (1) mit einem Akkumulator (3).

Um eine Solarleuchte (1) zur Verfügung zu stellen, die über eine verlängerte Leuchtdauer sowie erhöhte Leuchtkraft verfügt, schlägt die Erfindung vor, dass der Akkumulator (3) ein Lithium-Ionen-Akkumulator oder ein Lithium-Eisen-Phosphat-Akkumulator ist.

## Beschreibung

Die Erfindung betrifft eine Solarleuchte mit einem Akkumulator.

Solarleuchten der eingangs genannten Art sind dem Fachmann bekannt und geläufig.

Die bisher am Markt befindlichen Solarleuchten, d.h. durch Sonnenenergie versorgte Leuchten, sind mit einem Leuchtmittel versehen. Bei dem Leuchtmittel kann es sich beispielsweise um eine oder mehrere Leuchtdioden handeln. Das Leuchtmittel wird aus einem elektrischen Energiespeicher gespeist, der vornehmlich als Akkumulator ausgebildet ist.

Weitere Komponenten einer herkömmlichen Solarleuchte sind eine Solarzelle, die mit weiteren Solarzellen zu einem Solarmodul zusammengesetzt ist, sowie eine elektronische Schaltung, dem Laderegler. Die Solarzelle wandelt tagsüber das einfallende Licht in elektrische Energie um, die in dem Akkumulator zwischengespeichert wird, und steht weiterhin in Wirkverbindung mit dem Regler, der wiederum mit einem Lichtsensor verbunden ist, und dem Leuchtmittel.

Der Lichtsensor misst die Lichtintensivität der Umgebung und stellt bei geringem Lichteinfall (z.B. Abenddämmerung) die Verbindung zwischen Akkumulator und Leuchtmittel automatisch her. Infolgedessen beginnt das Leuchtmittel nach Sonnenuntergang bzw. bei geringem Lichteinfall automatisch zu leuchten. Aus dem Stand der Technik bekannte Solarleuchten weisen teilweise noch weitere Mittel, wie beispielsweise Bewegungsmelder, Unterbrechungsschaltungen (Blinklicht) oder einen periodischen Wechsel zwischen mehreren, unterschiedlich farbigen Leuchtmitteln bzw. einen Farbwechsel innerhalb eines Leuchtmittels auf. Die Steuerung kann zudem durch einen Timer, eine Fernbedienung oder andere Schaltfunktionen ergänzt werden.

Um die zur Verfügung stehende maximal gespeicherte Energie effizient einzuteilen, ist die Leuchtkraft der aus dem Stand der Technik bekannten Solarleuchten relativ gering, was insbesondere in dunklen Jahreszeiten nachteilig ist, in denen Solarleuchten in der Regel temporär länger verfügbar sein müssen. Bisher in Solarleuchten verwendete Akkumulatoren, wie Nickel-Metallhydrid- oder Nickel-Cadmium-Akkumulatoren, weisen zu geringe Energiedichten und Nennspannungen auf, um die Leuchtkraft signifikant zu erhöhen oder die Leuchtdauer zu verlängern.

Es ist deshalb Aufgabe der Erfindung, eine Solarleuchte der eingangs genannten Art zur Verfügung zu stellen, die über eine verlängerte Leuchtdauer sowie erhöhte Leuchtkraft verfügt.

Diese Aufgabe wird mit den Merkmalen des Anspruches 1 gelöst. Vorteilhafte Ausgestaltungen der Erfindung ergeben sich aus den Unteransprüchen.

Die Erfindung sieht vor, dass der Akkumulator ein Lithium-Ionen-Akkumulator oder ein Lithium-Eisen-Phosphat-Akkumulator ist. Ein derartiger Akkumulator bietet den Vorteil, dass die Energiedichte höher als die Energiedichten der bisher in Solarleuchten verwendeten Akkumulatoren liegt. Zudem liefert ein Lithium-Ionen-Akkumulator eine Nennspannung, ab 3,2 V sowie ein Lithium-Eisen-Phosphat-Akkumulator eine Nennspannung ab 3,3 V, welche somit höher als die herkömmlich in Solarleuchten verwendeten Nennspannungen sind.

Die durch den Lithium-Ionen-Akkumulator oder Lithium-Eisen-Phosphat-Akkumulator zur Verfügung stehende höhere Energiedichte und Nennspannung kann im Rahmen der Erfindung durch Erweiterung des Leuchtmittels gezielt genutzt werden. Eine vorteilhafte Ausgestaltung der Erfindung sieht daher vor, dass die Solarleuchte mehrere Leuchtmittel oder ein helleres Leuchtmittel, insbesondere in Form von Leuchtdioden, umfasst, was zu einer höheren Leuchtwirkung führt.

Das Leuchtmittel kann mit Aufsätzen aus hochwertigem Kunststoff oder Fiberoptik-Elementen ergänzt sein.

Um dem Lithium-Ionen-Akkumulator bzw. dem Lithium-Eisen-Phosphat-Akkumulator von vornherein mehr Energie zuzuführen, sieht eine weitere vorteilhafte Ausgestaltung der Erfindung vor, dass das Solarmodul ein vorgeschnittenes Modul ist. Bei dieser Bauform des Solarmodules erhält das Solarmodul entgegen den sogenannten Bruchmodulen von vornherein einen bestimmten vergrößerten Flächenzuschnitt, was wiederum zu einem höheren Wirkungsgrad des Modules führt.

Um die Solarleuchte auch auf lockerem Untergrund, beispielsweise in Gärten, zu positionieren, sieht eine praktikable Variante der Erfindung vor, dass die Solarleuchte ein Befestigungsmittel in Gestalt eines Erdspießes aus Aluminium oder hochwertigem Kunststoff aufweist. Hiermit fällt es dem Benutzer leichter, die Solarleuchte häufiger an einer gewünschten Stelle einzustecken. Weitere Varianten sind z.B. Schwanenhals, Wandhalterung, Standfuß oder ähnliche Befestigungsmöglichkeiten.

Es ist von Vorteil, dass der Leuchtenfuß und/oder das Elektrikgehäuse aus Edelstahl oder hochwertigem Kunststoff gebildet ist. Hierdurch sind die Solarleuchten, die vornehmlich im Freien aufgestellt werden, eher vor negativen Witterungseinflüssen geschützt.

Schließlich sieht die Erfindung die Verwendung der Solarleuchte für eine Lichterkette vor.

Im Folgenden wird die Erfindung anhand der Zeichnung näher erläutert. Es zeigt in schematischer Darstellung:

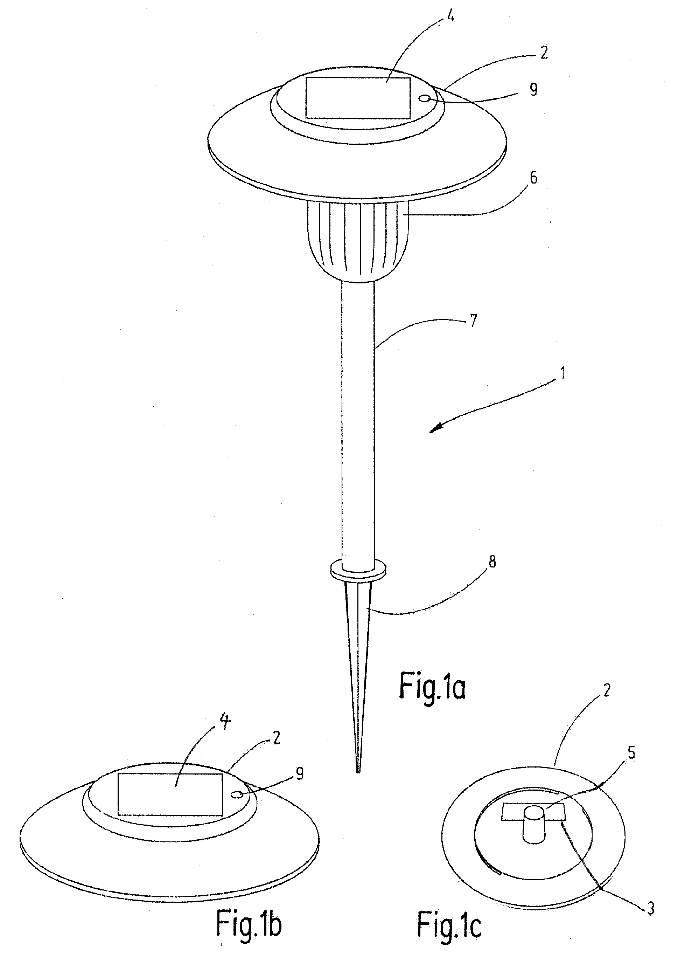

- Fig. 1a bis 1c: in perspektivischer Ansicht eine Solarleuchte sowie eine Außen-und Innenansicht des Elektrikgehäuses der Solarleuchte.

Fig. 1a zeigt eine Solarleuchte, die mit dem Bezugszeichen 1 versehen ist.

Die in Fig. 1a dargestellte Solarleuchte 1 ist insbesondere für die Nutzung im Freien konstruiert und weist oberseitig ein Elektrikgehäuse 2 auf, welches aus Edelstahl gebildet ist und eine runde Form aufweist. Auf dem Elektrikgehäuse befinden sich das Solarmodul 4 sowie der Lichtsensor 9. Das Elektrikgehäuse 2 dient der Aufnahme und Unterbringung der wesentlichen funktionalen Bestandteile der Solarleuchte 1.

Hierzu zählt das in Fig. 1c gezeigte Leuchtmittel 5, das vorzugsweise in Gestalt einer Leuchtdiode vorliegt, sowie der Akkumulator 3, der in erfindungswesentlicher Weise als Lithium-Ionen Akkumulator oder Lithium-Eisen-Phosphat-Akkumulator vorliegt. Weitere in den Fig. 1a bis 1c jedoch nicht gezeigte funktionale Komponenten der Solarleuchte 1, die mit dem Solarmodul 4, dem Leuchtmittel 5, dem Lichtsensor 9 sowie dem Lithium-Ionen-Akkumulator bzw. Lithium-Eisen-Phosphat-Akkumulator 3 in Wirkverbindung stehen und ebenfalls in dem Elektrikgehäuse 2 untergebracht sind, sind beispielsweise ein Laderegler und ein elektrischer Schalter, die durch eine Fernbedienung und andere Komponenten ergänzt werden können.

Das Leuchtmittel 5, das sich, wie aus Fig. 1b hervorgeht, unterhalb des Elektronikgehäuses 2 nach unten erstreckt, ragt in das Leuchtglas 6, welches vorzugsweise aus Echtglas oder aus hochwertigem Kunststoff, z.B. Acryl, Silikon etc., besteht und mit dem Elektrikgehäuse 2 verbunden ist, hinein. Unterhalb des Leuchtglases 6 befindet sich der Leuchtenfuß 7, der vorzugsweise aus Edelstahl oder hochwertigem Kunststoff gebildet ist sowie von länglicher und runder Form ist. An dem dem Leuchtglas 6 abgewandten Ende des Leuchtfußes 7 ist ein Befestigungsmittel 8 in Gestalt eines Erdspießes ausgebildet, der sich in Längsrichtung zum freien Ende hin verjüngt und mit einem Haken abschließt.

Die in Fig. 1a gezeigten Bauteile der Solarleuchte 1, wie Elektrikgehäuse 2, Leuchtglas 6, Leuchtenfuß 7 und Befestigungsmittel 8, können miteinander fest oder lösbar verbunden sein. Im Falle einer lösbaren Verbindung können diese Bauteile im Rahmen der Erfindung beispielsweise zusammensteckbar sein.

Die Leistungsfähigkeit des in Fig. 1a gezeigten Solarmoduls 4 ist entgegen Bruchzellen durch seine vorgeschnittene Form erhöht. Dieses mit einer erhöhten Leistungsfähigkeit ausgestattete Solarmodul 4 ist wiederum mit dem in Fig. 1c gezeigten leistungsfähigen Lithium-Ionen-Akkumulator bzw. Lithium-Eisen-Phosphat-Akkumulator 3 geschaltet. Als weitere mögliche Ausgestaltung kann über eine Steckverbindung z.B. am Solarmodul 4 Strom von außen aufgenommen werden.

Die vorliegende Erfindung beschränkt sich in ihrer Ausführung nicht auf das vorstehend angegebene Ausführungsbeispiel. Vielmehr ist eine Anzahl von Varianten denkbar, welche von der dargestellten Lösung auch bei anders gearteten Ausführungen Gebrauch machen.

Beispielsweise kann das Befestigungsmittel 8 auch in Gestalt einer Wandhalterung vorliegen.

### Bezugszeichenliste:

- 1: Solarleuchte
- 2: Elektrikgehäuse
- 3: Akkumulator
- 4: Solarmodul
- 5: Leuchtmittel
- 6: Leuchtglas
- 7: Leuchtenfuß
- 8: Befestigungsmittel
- 9: Lichtsensor

## Patentansprüche

1. Solarleuchte (1) mit einem Akkumulator (3),
**dadurch gekennzeichnet,**
**dass** der Akkumulator (3) ein Lithium-Ionen-Akkumulator oder ein Lithium-Eisen-Phosphat-Akkumulator ist.

2. Leuchte nach Anspruch 1,
**dadurch gekennzeichnet,**
**dass** sie mindestens ein Leuchtmittel (5) umfasst.

3. Leuchte nach Anspruch 2,
**dadurch gekennzeichnet,**
**dass** das Leuchtmittel (5) eine Leuchtdiode ist.

4. Leuchte nach einem der Ansprüche 1 bis 3,
**dadurch gekennzeichnet,**
**dass** sie ein vorgeschnittenes Solarmodul (4) aufweist.

5. Leuchte nach einem der vorhergehenden Ansprüche,
**dadurch gekennzeichnet,**
**dass** sie ein Leuchtglas (6) aufweist, das aus Echtglas und/oder hochwertigem Kunststoff besteht.

6. Leuchte nach einem der vorhergehenden Ansprüche,
**dadurch gekennzeichnet,**
**dass** sie ein Befestigungsmittel (8), wie beispielsweise einen Erdspieß, Schwanenhals, Wandhalterung, aufweist.

7. Leuchte nach einem der vorhergehenden Ansprüche,
**dadurch gekennzeichnet,**
**dass** sie einen Leuchtenfuß (7) aufweist, der aus Edelstahl oder hochwertigem Kunststoff gebildet ist.

8. Leuchte nach einem der vorhergehenden Ansprüche,
**dadurch gekennzeichnet,**
**dass** sie ein Elektrikgehäuse (2) aufweist, das aus Edelstahl oder hochwertigem Kunststoff gebildet ist.

9. Leuchte nach einem der vorhergehenden Ansprüche,
**dadurch gekennzeichnet,**
**dass** sie mit mindestens einem Solarmodul (4) versehen ist.

10. Leuchte nach einem der Ansprüche 6 bis 9,
**dadurch gekennzeichnet,**
**dass** das Befestigungsmittel aus Aluminium oder einem hochwertigen Kunststoff gebildet ist.

11. Verwendung einer Leuchte gemäß einem der Ansprüche 1 bis 10 für eine Lichterkette.
